# EUROPÄISCHE PATENTANMELDUNG

(11) **EP 1 953 487 A1**
(43) Veröffentlichungstag der Anmeldung: **06.08.2008**
(21) Anmeldenummer: 08001603.3
(22) Anmeldetag: 29.01.2008
(51) Int. Cl.: F27D 1/00, C04B 35/66, C04B 35/632

(54) **Feuerfeste Masse zur Auskleidung eines metallurgischen Gefässes**

(30) Priorität: 05.02.2007 DE 102007006452
(71) Anmelder: Weerulin GmbH, 45472 Mülheim/Ruhr (DE)
(72) Erfinder: Pawlig, Oliver, Dr., 47051 Duisburg (DE); Wünsch, Axel, 46047 Oberhausen (DE)
(74) Vertreter: Gerber, Wolfram

(57) **Zusammenfassung**

Die Erfindung betrifft eine feuerfeste Masse zur Auskleidung eines metallurgischen Gefäßes, wie z.B. eines Verteilers (engl. Tundish) oder einer Pfanne, wobei die feuerfeste Masse überwiegend aus einem Rohstoff oder Rohstoffgemisch besteht, welcher bzw. welches durch ein thermisch aktivierbares Bindemittel verbindbar oder verklebbar ist, wobei das Bindemittel eine Carbonsäure, insbesondere eine Hydroxycarbonsäure oder eine Mischung aus verschiedenen Carbonsäuren ist.

## Beschreibung

Die vorliegende Erfindung betrifft eine feuerfeste Masse zur Auskleidung eines metallurgischen Gefäßes, wie z.B. eines Verteilers (engl. Tundish) oder einer Pfanne, wobei die feuerfeste Masse überwiegend aus einem Rohstoff oder Rohstoffgemisch besteht, welcher bzw. welches durch ein thermisch aktivierbares Bindemittel verbindbar oder verklebbar ist.

Beim Gießen von Stahl oder Nicht-Eisen-Metallen (NE-Metallen) werden sogenannte Verteiler, im engl. Tundish genannt, verwendet. Diese Verteiler sind in der Regel ausgemauerte oder betonierte Stahlbehälter. Um die feuerfest zugestellte Innenwandung der Verteiler, welche auch als Dauerfutter bezeichnet wird, gegenüber dem heißen Stahl oder NE-Metall zu schützen, wird das Dauerfutter mit einem schützenden Arbeitsfutter versehen. Um dieses Arbeitsfutter herzustellen, wird in den Verteiler eine Schablone eingebracht, die zu dem Dauerfutter beabstandet ist. Der Zwischenraum wird mit einer feuerfesten Masse ausgefüllt welche in einem weiteren Arbeitsschritt erwärmt wird, wobei das Bindemittel bzw. die Binderkomposition der feuerfesten Masse thermisch aktiviert wird und hierdurch das Bindemittel die Rohstoffe der Rieselmasse miteinander verbindet bzw. verklebt, so dass die ausgehärtete feuerfeste Masse die Oberfläche des Dauerfutters nachhaltig schützt.

Die einfache Schablone besteht z.B. lediglich aus einer Stahlblechhülle und wird, im Falle eines Verteilers, mit einem konventionellen Tundishfeuer beheizt. Es handelt sich um eine kostengünstige Variante, die jedoch relativ viel Zeit benötigt, wodurch viel Energie erforderlich ist. Integrierte Schablonen mit einer Heizvorrichtung aus einer Gasringleitung oder elektrischen Heizpanelen im Inneren der Schablone stellen zwar eine höhere Investition dar, Energiebedarf und Zeitaufwand erweisen sich jedoch als wesentlich günstiger. Der mit feuerfester Masse zugestellte Tundish kann nach dem Ziehen der Schablone sowohl als Kalt- oder Warmverteiler eingesetzt werden. Die Wandstärke der eingebrachten Rieselmasse wird den metallurgischen Bedingungen angepasst.

Als Rohstoffe für die feuerfeste Masse können z.B. Sinter- oder Schmelzmagnesia, Olivine, Sinter-Bauxite, Sinter-Dolomite, Forsterite oder feuerfeste Alumina-basierte Sinter- und Schmelzprodukte, Recyclingmaterialien der vorstehenden Rohstoffe oder eine Zusammensetzung der vorgenannten Rohstoffe verwendet werden. Die Rohstoffe sind in verschiedene Kornfraktionen klassiert und werden in festgelegten Anteilen miteinander vermischt. Für die Zusammensetzung des Mischverhältnisses sind zum einen Kostenaspekte als auch metallurgische Gründe, wie z.B. die Stahlgüte bei niedrig gekohlten Stählen (ultra low carbon (ULC) und IF) entscheidend. Die feuerfeste Masse kann auch als Rieselmasse auf die zu schützende Oberfläche aufgetragen werden. Da die feuerfeste Masse, welche insbesondere auch als Rieselmasse auf die zu schützende Oberfläche aufgetragen werden kann, keinen Erzeugnisbrand erfährt, muss ihre Gefügefestigkeit von Raumtemperatur bis zur Anwendungstemperatur mittels eines Bindemittels bzw. Binders erzielt werden. Die bisher verwendeten Binder sind im Allgemeinen vorwiegend organisch - chemischer Natur. Anorganische Bestandteile können jedoch auch enthalten sein.

Zu dieser Bindergruppe gehören z.B. Melasse, Ligninsulfonat, Teer, Pech und synthetische Harze, wobei mit letzteren eine besonders gute Verschlackungsbeständigkeit erreicht wurde. Aus Gründen der Arbeitsmedizin und des Umweltschutzes verzichtet man zunehmend auf Teer und Pech.

So hat das heute meist verwendete Phenolharz eine überragende Bedeutung erlangt.

### Probleme des Standes der Technik:

Während der thermischen Aktivierung des Binders sowie beim Herausziehen der Schablone tritt aufgrund des freigesetzten Ammoniaks eine Geruchsbelästigung auf. Beim Erwärmen des Phenolharzes kommt es zur Pyrolyse desselben zu Kohlenstoff, Wasser, Phenol, Kresol, 2,4- und 2,6-Xylenol, Formaldehyd, CO, CO₂ und Methan. Bei den üblich verwendeten Härtern wird zusätzlich Ammoniak während der Pyrolyse freigesetzt. Die Geruchsbelästigung ist beispielsweise bei der Verwendung von Hexamethylen-Tetramin als Härter so stark, dass neue Binder seitens der Anwender als sehr wünschenswert erscheinen. Zudem wird in der Arbeitsmedizin gegenwärtig intensiv über die gesundheitsschädliche Wirkung von z.B. Formaldehyd und Hexamethylen-Tetramin diskutiert. Eine gesundheitsschädliche Wirkung ist hier somit nicht auszuschließen. Durch den meist verwendeten Harzbinder, welcher vor dem thermischen Aktivieren in Pulverform mit den Rohstoffen vermischt ist, und bedingt durch den Feinkornanteil mancher feuerfester Massen, kommt es zu einer Staubentwicklung bei der Zustellung des Verteilers. Es kommt so zu einer Belastung des Bedienpersonals. Aus diesem Grund wird, sofern dies aus metallurgischen Gründen möglich ist, der feuerfesten Masse ein Öl beigemengt, welches den Staub binden soll. Der Kohlenstoffanteil des Öls kann negative metallurgische Auswirkungen auf die Stahlqualität haben. Ferner kann es bei der Lagerung und Verarbeitung der üblichen Harzpulver zu elektrostatischen Aufladungen kommen, mit der damit verbundenen Gefahr einer Staubexplosion.

### Aufgabe

Aufgabe der vorliegenden Erfindung ist es, eine feuerfeste Masse, insbesondere in Form einer Rieselmasse bereitzustellen, die die vorbeschriebenen Nachteile vermeidet.

Diese Aufgabe wird erfindungsgemäß dadurch gelöst, dass als Binder bzw. Bindemittel eine Carbonsäure verwendet wird. Weitere vorteilhafte Ausgestaltungen der erfindungsgemäßen feuerfesten Masse ergeben sich durch die Merkmale der auf den Anspruch 1 rückbezogenen Unteransprüche.

Carbonsäuren sind organische Verbindungen, die eine oder mehrere Carboxylgruppen (-COOH) tragen. Ihre Salze werden Carboxylate und ihre Ester in der Regel Carbonsäureester genannt. In der Tier- und Pflanzenwelt kommen zahlreiche Carbonsäuren in freier oder gebundener Form (häufig als Ester) vor. Viele Verbindungen tragen unsystematische Namen, die meist auf das Wort -säure enden. Der Name selbst weist gelegentlich auf die Substanz hin, aus welcher die Carbonsäure gewonnen wird (Ameisensäure, Buttersäure, Weinsäure, Citronensäure etc). Von Vorteil ist, dass viele Carbonsäuren gesundheitlich unbedenklich sind.

Versuche mit Citronensäure und Weinsäure zeigten bisher, dass für feuerfeste Massen nach thermischer Behandlung hohe Festigkeiten erzielt werden können. Die Citronensäure (C₆H₈O₇ oder 2-Hydroxy-1,2,3-propantricarbonsäure) ist hier besonders geeignet, da sie ungiftig ist und beim Erhitzen keine gesundheitsschädlichen Stoffe absondert. Ferner ist sie beim Erhitzen geruchsneutral einschließlich des Prozesses der thermisch induzierten Zersetzung.

Die Carbonsäure kann entweder in fester Form als Pulver den Rohstoffen beigemischt werden, so dass die feuerfeste Masse fertig angeliefert werden kann. Es ist jedoch auch möglich, der feuerfesten Masse eine flüssige Carbonsäure, insbesondere Citronensäure und/oder Palmitinsäure, als Binder zuzufügen. Da die Verwendung von flüssiger Carbonsäure meist eine bereits bei Raumtemperatur klebende und sich verfestigende Masse ergibt, ist es vorteilhaft, das flüssige Bindemittel erst unmittelbar vor oder beim Zustellen der Verteiler oder anderen metallurgischen Gefäße den Rohstoffen beizufügen bzw. beizumengen. Dies kann z.B. durch Eindüsen oder mittels einer Schnecke erfolgen, wodurch jedoch vor Ort zwei Silos zur Lagerung der Rohstoffe und des Bindemittels notwendig sind.

Geschieht die Zuführung der erfindungsgemäßen feuerfesten Masse beim Auskleiden des metallurgischen Gefäßes, so kann auf etablierte Eindüseinrichtungen zurückgegriffen werden. Auf die Verwendung einer Schablone kann in diesem Fall unter Umständen verzichtet werden, sofern die feuerfeste Masse genügend an der zu schützenden Oberfläche haftet. In diesem Falle kann die thermische Aktivierung mittels geeigneter Heizvorrichtungen erfolgen. Ebenso ist es denkbar, dass eine thermische Aktivierung nicht unbedingt erforderlich ist, sofern das Bindemittel bereits bei Raumtemperatur bindet. Auch kann der Tundish vorgeheizt sein, wodurch die thermische Aktivierung bereits durch die im Tundish gespeicherte thermische Energie erfolgt.

Sofern flüssige Carbonsäuren, wie z.B. Citronensäure oder Palmitinsäure verwendet werden, sind die erforderlichen Temperaturen zur thermischen Aktivierung mit denen von Harzbindern vergleichbar.

Es ist selbstverständlich möglich, eine Mischung aus Carbonsäuren als Bindemittel zu verwenden. Gleichsam kann das Bindemittel zusätzlich zu einer oder mehreren Carbonsäuren auch noch andere geeignete Bestandteile aufweisen. Die Citronensäure ist z.B. aus Kostengründen und der guten Verfügbarkeit und leichten Lagerung bevorzugt einsetzbar.

Sofern allgemein von Carbonsäure gesprochen wird, sind im Sinne der Erfindung alle Carbonsäuren, insbesondere Hydroxycarbonsäuren oder Aminocarbonsäuren gemeint.

Die erfindungsgemäße feuerfeste Masse enthält vorteilhaft ca. 0,1 bis 15 Massen-% Bindemittel. Sofern die Carbonsäure in fester Form als Bindemittel den Rohstoffen beigemischt ist, hat sich ein Anteil von 7 bis 12 Massen-% als besonders vorteilhaft herausgestellt. Sofern die Carbonsäure in flüssiger Form als Bindemittel den Rohstoffen beigemischt wird, hat sich ein Anteil von 5 bis 9 Massen-% als besonders vorteilhaft herausgestellt.

Nachfolgend wird eine mögliche Zusammensetzung der erfindungsgemäßen feuerfesten Masse aufgeführt (mit feuerfester Masse ist hier z.B. eine Rieselmasse, Hinterfüllmasse oder Schlämmspritzmasse gemeint):
- Rohstoff auf Basis Sinter- oder Schmelzmagnesia, Olivine, Sinter-Bauxite, Sinter-Dolomite, Forsterite oder feuerfeste Alumina-basierte Sinter- und Schmelzprodukte, Recyclingmaterialien der vorstehenden Rohstoffe oder eine Zusammensetzung der vorgenannten Rohstoffe
- Eine Mono-, Di- oder Tricarbonsäure in fester und / oder flüssiger Form mit einem Mindestgehalt von ca. 2 Massen-% bezogen auf die Gesamtmasse der Mischung als Bindemittel. Als Carbonsäure kann z.B. Citronensäure als Anhydrid, Monohydrat oder als Flüssigkeit verwendet werden.

Es wird davon ausgegangen, dass sich beim Erhitzen einer wie oben beschriebenen Mischung auf ca. 150°C bis 200°C Salze der Citronensäure bilden (z.B. Magnesiumcitrat, Calciumcitrat etc.). Es handelt sich allgemein um Metallcitrat-Hydrate, die sich bei weiterer Erhitzung stufenweise zersetzen.

Bei Erhitzung der feuerfesten Masse erfolgt eine Zersetzung, die am Beispiel des Magnesiumcitrat-Hydrates nachfolgend aufgeführt wird:
1) Entwässerung:

   Mg₃(C₆H₅O₇)₂·14H₂O → Mg₃(C₆H₅O₇)₂·9H₂O + 5 H₂O (ab ca. 200°C)
2) Bildung von ungiftigem Magnesiumaconitat:

   Mg₃(C₆H₅O₇)₂·9H₂O → Mg₃(C₆H₃O₆)₂ + 11 H₂O (250 - 390°C)
3) Zersetzung des Magnesiumaconitats zu Magnesiumcarbonat:

   Mg₃(C₆H₃O₆)₂ → 3 MgCO₃ + 3 H₂O + 9 C (ca. 470°C)
4) Zersetzung des Magnesiumcarbonats zu Magnesiumoxid:

   MgCO₃ → MgO + CO₂ (600 - 900°C)

Die Wirkungsweise des Binders beruht auf der Bildung von Metallcitraten, d.h. die Citronensäure bindet mit der Oberfläche des Rohstoffkorns eine metallorganische Bindung aus und verbrückt über freie Carbonylgruppen mit einem nächstgelegenen Rohstoffkorn, zu dem ebenfalls eine solche Bindung besteht.

Die oben erwähnten, thermisch induzierten Umwandlungen vollziehen sich topochemisch, d.h. unter Beibehaltung der Kristallform.

Bezüglich der bei höheren Temperaturen emittierten Stoffe ist hier im Vergleich zu den bereits erwähnten Phenolharzen lediglich mit H₂O, CO₂ sowie, in geringsten Mengen, CO zu rechnen - dies gilt für alle aliphatischen Carbonsäuren. Die bei der Pyrolyse phenolischer Harze entstehenden problematischen organischen Verbindungen sowie Ammoniak werden hier nicht emittiert.

Hierdurch bedingt ist im Vergleich zu den Phenolharzen die Geruchsbelästigung beim Erhitzen vernachlässigbar.

## Patentansprüche

1. Feuerfeste Masse zur Auskleidung eines metallurgischen Gefäßes, wie z.B. eines Verteilers (engl. Tundish) oder einer Pfanne, wobei die feuerfeste Masse überwiegend aus einem Rohstoff oder Rohstoffgemisch besteht, welcher bzw. welches durch ein thermisch aktivierbares Bindemittel verbindbar oder verklebbar ist, **dadurch gekennzeichnet, dass** das Bindemittel eine Carbonsäure, insbesondere eine Hydroxycarbonsäure oder eine Mischung aus verschiedenen Carbonsäuren ist.

2. Feuerfeste Masse nach Anspruch 1, **dadurch gekennzeichnet, dass** das Bindemittel Citronensäure oder Palmitinsäure ist.

3. Feuerfeste Masse nach Anspruch 1 oder 2, **dadurch gekennzeichnet, dass** die Carbonsäure in fester Form (als Citronensäure Anhydrat oder Citronensäure Monohydrat) den Rohstoffen beigemischt ist.

4. Feuerfeste Masse nach einem der vorhergehenden Ansprüche, **dadurch gekennzeichnet, dass** die feuerfeste Masse als Rohstoff Sinter- oder Schmelzmagnesia, Olivine, Sinter-Bauxite, Sinter-Dolomite, Forsterite oder feuerfeste Alumina-basierte Sinter- und Schmelzprodukte oder eine Mischung aus allen oder einigen der Rohstoffe enthält.

5. Feuerfeste Masse nach einem der vorhergehenden Ansprüche, **dadurch gekennzeichnet, dass** die feuerfeste Masse als Rohstoff oder Rohstoffbestandteil recycelte Sinter- oder Schmelzmagnesia, Olivine, Sinter-Bauxite, Sinter-Dolomite, Forsterite oder Alumina-basierte Sinter- und Schmelzprodukte enthalten kann.

6. Feuerfeste Masse nach einem der vorhergehenden Ansprüche, **dadurch gekennzeichnet, dass** die feuerfeste Masse einen Anteil von 0,1 bis 15 Massen-% des Bindemittels enthält.

7. Feuerfeste Masse nach einem der vorhergehenden Ansprüche, **dadurch gekennzeichnet, dass** die feuerfeste Masse einen Anteil von 4 bis 12 Massen-%, insbesondere 8 Massen-% des Binders in fester Form enthält.

8. Feuerfeste Masse nach einem der vorhergehenden Ansprüche, **dadurch gekennzeichnet, dass** die Carbonsäure oder das Carbonsäuregemisch als Granulat oder Pulverform dem bzw, den Rohstoffen beigemischt ist.

9. Feuerfeste Masse nach einem der Ansprüche 1, 2 und 4 bis 7, **dadurch gekennzeichnet, dass** die Carbonsäure, insbesondere Citronensäure oder Palmitinsäure oder eine Mischung aus mehreren Carbonsäuren den Rohstoffen oder dem Rohstoffgemisch in flüssiger Form zugefügt bzw. beigemengt sind.

10. Feuerfeste Masse nach Anspruch 9, **dadurch gekennzeichnet, dass** die feuerfeste Masse einen Anteil von 4 bis 9 Massen-%, insbesondere 6 bis 8 Massen-% des Bindemittels in flüssiger Form enthält.

11. Feuerfeste Masse nach einem der vorhergehenden Ansprüche, **dadurch gekennzeichnet, dass** die feuerfeste Masse nach der thermischen Aktivierung und/oder dem Aufheizen über 1000°C wieder als Rohstoff mit geringem Kohlenstoffanteil für die feuerfeste Masse verwendbar bzw. aufbereitbar ist.

12. Feuerfeste Masse nach einem der vorhergehenden Ansprüche, **dadurch gekennzeichnet, dass** die Rohstoffzusammensetzung herkömmlichen Rohstoffzusammensetzungen entspricht, wobei das herkömmliche Bindemittel durch eine Carbonsäure, insbesondere eine Hydroxycarbonsäure oder eine Mischung aus verschiedenen Carbonsäuren ersetzt ist.

13. Feuerfeste Masse nach einem der vorhergehenden Ansprüche, **dadurch gekennzeichnet, dass** die feuerfeste Masse als Rieselmasse ausgebildet ist.

14. Verfahren zur Herstellung der feuerfesten Masse nach einem der vorhergehenden Ansprüche, **dadurch gekennzeichnet, dass** das Bindemittel in flüssiger Form beim oder vor dem Auskleiden der metallurgischen Gefäße den Rohstoffen zugeführt wird.

15. Verfahren zur Herstellung der Rieselmasse nach Anspruch 14, **dadurch gekennzeichnet, dass** das Bindemittel in die Rohstoffmasse eingedüst oder mittels einer Schnecke mit den Rohstoffen vermengt wird und über etablierte Maschinentechnik auf die gewünschte Oberfläche verspritzt wird.

16. Verfahren zur Auskleidung eines metallurgischen Gefäßes mit einer erfindungsgemäßen feuerfesten Masse nach einem der Ansprüche 1 bis 15, **dadurch gekennzeichnet, dass** die feuerfeste Masse auf die zu schützende Oberfläche aufgetragen wird, wobei beim Auftragen bzw. Beschichten oder unmittelbar davor, das Bindemittel dem Rohstoff bzw. dem Rohstoffgemisch beigefügt wird.

17. Verfahren nach Anspruch 16, **dadurch gekennzeichnet, dass** das metallurgische Gefäß vor dem Beschichtungsvorgang nach Anspruch 15 auf eine Temperatur aufgeheizt wurde, die zur thermischen Aktivierung der feuerfesten Masse ausreicht.

18. Verfahren nach Anspruch 16, **dadurch gekennzeichnet, dass** nach dem Beschichtungsvorgang die thermische Aktivierung mittels einer Heizquelle, insbesondere der Schablone erfolgt.
